# EUROPEAN PATENT APPLICATION

(11) **EP 4 609 939 A1**
(43) Date of publication of application: **03.09.2025**
(21) Application number: 25161145.5
(22) Date of filing: 28.02.2025
(51) Int. Cl.: B01D 53/14, B01D 53/18, B01D 53/22

(54) **HYDROCYCLONE CONTACTOR FOR CARBON DIOXIDE REMOVAL**

(30) Priority: 01.03.2024 GB 202403473
(71) Applicant: Sagentia Ltd, Cambridgeshire CB22 7GG (GB)
(72) Inventor: POTTER, ANDREW ROBERT, CAMBRIDGE, CB22 7GG (GB)
(74) Representative: Mathys & Squire

(57) **Abstract**

The present invention relates to a hydrocyclone contactor module for use in gas purification. In particular, the present invention relates to a CO₂ removing hydrocyclone contactor module, a system comprising one more CO₂ removing hydrocyclone contactor modules as defined herein, a method of removing CO₂ from gas using the hydrocyclone contactor module, a method of retrofitting the hydrocyclone contactor module or system comprising the hydrocyclone contactor module into a submarine atmospheric control system, and a submarine comprising the hydrocyclone contactor module or system comprising the hydrocyclone contactor module. In a one aspect, the present invention relates to a module for removing CO₂ from gas, the module comprising: a hydrocyclone having a cyclonic cone section constructed from a gas-permeable and liquid-impermeable membrane; an inlet to the cyclonic cone section; and an outlet at the apex of the cyclonic cone section.

## Description

### FIELD OF THE INVENTION

The present invention relates to a hydrocyclone contactor module for use in gas purification. In particular, the present invention relates to a CO₂ removing hydrocyclone contactor module, a system comprising one more CO₂ removing hydrocyclone contactor modules as defined herein, a method of removing CO₂ from gas using the hydrocyclone contactor module, a method of retrofitting the hydrocyclone contactor module or a system comprising the hydrocyclone contactor module into a submarine atmospheric control system, and a submarine comprising the hydrocyclone contactor module or system comprising the hydrocyclone contactor module.

### BACKGROUND OF THE INVENTION

In a submarine environment, it is critical to remove carbon dioxide (CO₂) from the atmospheric gas to ensure the safety and wellbeing of the submarine crew. Current systems rely on direct liquid-gas contactors where CO₂ from the gas dissolves into the absorber liquid.

Although current technology is proven, atmospheric quality in submarines is usually suboptimal with higher than desired levels of CO₂. Therefore, there is a need for improved CO₂ scrubbing technologies to reduce the level of ambient CO₂, particularly for long duration submarine voyages.

It is an object of this invention to provide a technology which is more effective at removing CO₂ from the atmosphere than the existing legacy technologies stated above.

It is a further object of this invention to provide an improved CO₂ scrubbing technology which can be retrofitted to existing submarine atmospheric control systems.

One family of liquid absorbers commonly used to absorb and transport CO₂ within CO₂ separation systems are liquid amines. The CO₂ reacts in a gas-liquid contactor, with the amine capturing the CO₂ and allowing unreacted gas to return to the atmosphere in the submarine. One particular issue with these systems is that in order to remove the <0.5% of CO₂ in ambient gas, the remaining 99.5% of gas must also be contacted with the absorbing liquid.

Fast gas contactors rely on creating large areas of interface between gas and liquid, this could be via bubbles, droplets or aggressively churned contactor tanks. However, an unwanted consequence of creating large amounts of liquid-gas contact and the vast majority of the gas then separating is that significant amounts of the liquid phase are carried out of the system as entrained droplets in the 'purified' gas stream.

With large volume gas flows, unacceptable levels of airborne absorber chemistry can readily be reached, so liquid contactor systems utilise a clean-up secondary process to remove dangerous amines or amine breakdown products from the purified gas stream. This is vital for operation in closed environments such as submarines, as gas cannot simply be vented and refreshed. Due to the necessary health and safety limits on airborne contaminants, these secondary cleanup systems must be effective. In order to achieve necessary filtration they can be as bulky as the contactor system itself, increasing the overall CO₂ separation system volume in an application where space is at a premium.

A hydrocyclone is a device commonly used to separate particles from a liquid or gas mixture based on their size, shape, and density. A hydrocyclone works by creating a high-speed, rotating flow within a cylindrical or conical chamber. This swirling motion generates centrifugal force, causing heavier particles to move outward toward the chamber walls, while lighter particles and fluid move toward the centre and exit through the top or bottom. Hydrocyclones are commonly used in industries like mining, wastewater treatment, oil and gas, and chemical processing.

### SUMMARY OF THE INVENTION

This invention utilises a hydrocyclone with cyclonic cone section constructed from a thin, gas permeable membrane. The liquid absorber is in a continuous flow spiral on the inside of the membrane section, maintaining a thin film of absorbent liquid that is continuously refreshed. Gas to be purified is passed around the outside of the membrane section of the hydrocyclone. The hydrocyclone module is described in UK patent application GB2403473.8 the entirety of which is incorporated by reference.

CO₂ from the gas stream can then pass through the gas-permeable membrane into the absorbent liquid and be carried to the desorption/recovery part of the CO₂ separation system. Because the liquid absorber and gas stream are kept physically separate, carryover of the amines into the outgoing gas stream is reduced.

This invention also offers a lower level of loss of liquid absorber, leading to increased lifespan of a particular amine solution batch. Less 'top up' or replacement means that cost, crew effort and storage requirements for the CO₂ separation system are all reduced. It also offers lower power consumption and independent adjustment of gas and amine flow rates.

In a first aspect, the present invention relates to a module for removing CO₂ from gas, the module comprising: a hydrocyclone having a cyclonic cone section constructed from a gas-permeable and liquid-impermeable membrane; an inlet to the cyclonic cone section; and an outlet at the apex of the cyclonic cone section. As would be appreciated, the orientation of the hydrocyclone does not change the region of the cyclonic cone section that is the apex. The apex is instead defined by the narrowest point of the cyclonic cone section.

In a second aspect, the present invention relates to a system for removing CO₂ from gas, the system comprising one or more modules according to the first aspect, a CO₂ separation unit, and a liquid absorber.

In a third aspect, the present invention relates to a method of removing CO₂ from gas, the method comprising: flowing a liquid absorber in a continuous flow spiral on the inside of the membrane section of a module according to the first aspect whilst simultaneously passing gas around the outside of the membrane section of the hydrocyclone to absorb CO₂ from the gas outside of the membrane section of the hydrocyclone; flowing the liquid absorber out of the outlet into a CO₂ separation unit to remove the CO₂; and flowing the refreshed liquid absorber through the inlet and into the continuous flow spiral on the inside of the membrane section of the module.

In a fourth aspect, the present invention relates to a method of retrofitting a module for removing CO₂ from gas as defined according to the first aspect, or a system for removing CO₂ from gas as defined according to the second aspect, into a submarine atmospheric control system.

In a fifth aspect, the present invention relates to a submarine comprising one or more modules for removing CO₂ from gas as defined according to the first aspect, or one or more systems for removing CO₂ from gas as defined according to the second aspect.

### BRIEF DESCRIPTION OF THE FIGURES

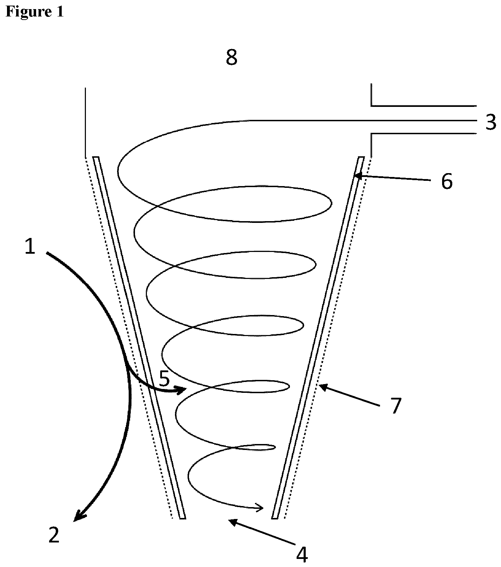

Figure 1 shows a membrane hydrocyclone arrangement with incoming and outgoing liquid and gas pathways.

### DETAILED DESCRIPTION OF THE INVENTION

In a first aspect, the present invention relates to a module for removing CO₂ from gas, the module comprising: a hydrocyclone having a cyclonic cone section constructed from a gas-permeable and liquid-impermeable membrane; an inlet to the cyclonic cone section; and an outlet at the apex of the cyclonic cone section.

For example, the module for removing CO₂ from gas may be a module for removing CO₂ from air, preferably from air within a submarine cabin. This is particularly useful inside the cabin of a submarine where CO₂ may accumulate and need to be removed.

Preferably, the inlet and the outlet are configured for fluidic communication with a CO₂ separation unit.

As would be appreciated, an 'inlet' is the entrance where liquid may enter the cyclonic cone section. Similarly, the 'outlet' is the exit where liquid may leave the cyclonic cone section. Configuration for fluidic communication with a CO₂ separation unit means that the inlet and outlet may be attached to, for example, a pipe which flows from the outlet to the CO₂ separation unit and from the CO₂ separation unit to the inlet.

The 'apex' of the cyclonic cone section refers to the narrowest point of the cyclonic cone section. The 'base' of the cyclonic cone section refers to the broadest point of the cyclonic cone section. As would be appreciated, the orientation of the hydrocyclone does not change the regions of the cyclonic cone section that are the apex and the base. Preferably the inlet is at the base of the cyclonic cone section.

The module may further comprise a second hydrocyclone having a cyclonic cone section constructed from a gas-permeable and liquid-impermeable membrane, a second inlet to the second cyclonic cone section, and a second outlet at the apex of the second cyclonic cone section, preferably wherein the second inlet and the second outlet are configured for fluidic communication with a CO₂ separation unit, either in parallel or in series with the first hydrocyclone. The module may further comprise one or more further hydrocyclones having a cyclonic cone section constructed from a gas-permeable and liquid-impermeable membrane, having an inlet to the cyclonic cone section, and an outlet at the apex of the cyclonic cone section, preferably wherein the inlet and the outlet are configured for fluidic communication with a CO₂ separation unit, and wherein each further hydrocyclone is either in parallel or in series with the first and/or second hydrocyclone. Typically, multiple hydrocyclones will share a CO₂ separation unit, although multiple CO₂ separation units may also be used.

Hydrocyclone technology is commonly employed in industrial applications. Hydrocyclones have an inlet through which liquid can be introduced tangentially, creating a swirling flow that moves towards the apex in a spiral. Due to the conical shape of a hydrocyclone, the liquid flow speeds up as the liquid descends. The liquid exits through an outlet at the apex. In the present invention, as the liquid circulates along the inner wall of the hydrocyclone, it is in contact with the gas-permeable and liquid-impermeable membrane. This allows it to absorb CO₂ that diffuses through the gas-permeable membrane. The liquid-impermeable requirement ensures that liquid absorber does not penetrate the membrane and exits only through the outlet. Crucially, this method prevents direct contact between external gas and the liquid absorber inside the hydrocyclone. The continuous vortex motion constantly refreshes the liquid film on the membrane's surface, ensuring that saturated liquid is swiftly replaced. Hydrocyclones are known in the art and the skilled person would be capable of using such a hydrocyclone device to maintain a film of liquid around the internal face the cyclonic cone section of the hydrocyclone. Providing the necessary shape of the cyclonic cone section and flow of the liquid is within the capabilities of the skilled person.

The size, cone angle and geometric features of the hydrocyclone can be fine-tuned to meet performance needs, depending on operational demand and number of parallel or series modules in the system, this would be within the capabilities of the skilled person. Key to performance is maintaining a thin, but continuously refreshed, film of liquid absorber in contact with the membrane inner surface.

The module according to the first aspect of the invention may be any suitable size, pertaining to the specific requirements for the vessel or application in which it is used. For example, the module may be from 0.1 m to 5 m in hight, 0.25 m to 5 m in hight, 0.5 m to 5 m in hight, or 1 m to 5 m in hight. For example, the module may be from 0.1 m to 5 m in hight, 0.1 m to 2.5 m in hight, 0.1 m to 1 m in hight, or 0.1 m to 0.5 m in hight. Wherein the hight is defined as the distance from the apex of the cyclonic cone section to the base of the cyclic cyclonic section.

The nature of the gas permeable and liquid impermeable membrane is not particularly limited and may be any suitable material satisfying that condition. This could be achieved via size exclusion, hydrophobic materials of construction or any technique used to create waterproof 'breathable' materials. For example, the gas permeable and liquid impermeable material may be polytetrafluoroethylene (PTFE), expanded polytetrafluoroethylene (ePTFE), silicone rubber, polyurethane membranes, polyethylene membranes, polypropylene membranes, hydrophobic nonwoven fabrics, polyvinylidene fluoride (PVDF), cellulose acetate membranes, nafion, polydimethylsiloxane (PDMS), porous ceramics, microporous Teflon, laminated breathable textiles, and fluoroelastomers.

Membrane thickness should be minimised to facilitate the maximum rate of gas transfer through the membrane. Preferably, the cyclonic cone section comprises a rigid external supporting mesh or embedded mesh within the membrane. Depending on the membrane material, it may be that a rigid external supporting mesh or embedded mesh within the membrane is used to maintain shape.

In addition, flow rates of both gas and liquid can be adjusted independently depending on system needs. For example, gas flow could be split two ways to parallel hydrocyclone chambers, whereas the liquid could visit these same two hydrocyclones in series, making use of the high CO₂ capacity of the liquid absorber .

Preferably the module further comprises one or more check valves. Check valves are useful for ensuring a one-way flow of liquid absorber, and may be present at the inlet and/or at the outlet. Preferably the module further comprises one or more valves which are capable of opening or closing the flow into the inlet. Preferably the module further comprises one or more valves which are capable of opening or closing the flow out of the outlet.

In a second aspect, the present invention relates to a system for removing CO₂ from gas, the system comprising one or more modules according to the first aspect, a CO₂ separation unit, and a liquid absorber.

The system for removing CO₂ from gas may be a system for removing CO₂ from air, preferably from air within a submarine cabin.

The nature of the liquid absorber is not particularly limited and can be any suitable chemical in a liquid state or dissolved in a liquid, that is capable of absorbing CO₂, one such example is liquid amine. Preferably the liquid absorber is liquid amine, such as monoethanolamine (MEA), diethanolamine (DEA), triethanolamine (TEA), methyldiethanolamine (MDEA), piperazine (PZ), diglycolamine (DGA), diisopropanolamine (DIPA), 2-amino-2-methyl-1-propanol (AMP), n-methyl-1,3-propane diamine (MPDA), ethylaminopropylamine (EAPA), n-methyldiethanolamine (MDEA), tetraethylenepentamine (TEPA), hexamethylenediamine (HMDA), ethylenediamine (EDA), n,n-dimethylcyclohexylamine (DMCA), propanolamine (PA), butylethanolamine (BEA), n-acetylethanolamine (NAE). The liquid amine may be neat or may be dissolved in any suitable solvent, such as water.

The CO₂ separation unit promotes desorption of CO₂ from the liquid absorber, allowing the liquid absorber to be recycled, and fed back to the hydrocyclone module. CO₂ separation units are known in the art and the CO₂ separation unit may be any suitable CO₂ separation unit. In confined environments, such as submarines, where replenishing the liquid absorber is not possible, recycling of the liquid absorber is paramount. Various CO₂ separation units are known in the art and may be easily put into fluid communication with the module of the present invention by the skilled person. Such CO₂ separation units may further make use of heating and/or reduced pressure to aid desorption of CO₂ from the liquid absorber. A CO₂ separation unit that may be referred to as a "scrubber system" in some publications. The CO₂ separation unit may be a scrubber system. Typically, the CO₂ separation unit comprises a heat source and preferably the heat source is a heat exchanger.

Typically, the system according to the second aspect further comprises a pump for the liquid absorber and/or a means for directed turbulent or laminar flow of gas, such as a fan. The system may comprise a pump for flowing liquid absorber into the CO₂ separation unit from the outlet and/or a pump for flowing liquid absorber into the inlet from the CO₂ separation unit.

Typically, the system according to the second aspect further comprises a cooling means, such as a cooler or heat exchanger, for cooling the liquid absorber. Alternatively, an existing on-board cooling means may be utilised. Cooling the liquid absorber is understood to refer to the process of reducing the temperature of the liquid absorber by removing heat energy. Cooling may cause a decrease in temperature or may maintain a stable temperature in order to prevent an increase in temperature. The optimum temperature to encourage absorption, and the optimum temperature to encourage desorption, will both depend on the type of liquid absorber.

The system may further comprise one or more sensors, for example, one or more heat sensor, CO₂ sensor, one or more sensor for other pollutants, one or more gas quality sensor, and/or one or more pressure sensor. The system may further comprise a timer.

In a third aspect, the present invention relates to a method of removing CO₂ from gas, the method comprising: flowing a liquid absorber in a continuous flow spiral on the inside of the membrane section of a module according to the first aspect whilst simultaneously passing gas around the outside of the membrane section of the hydrocyclone to absorb CO₂ from the gas outside of the membrane section of the hydrocyclone; flowing the liquid absorber out of the outlet into a CO₂ separation unit to remove the CO₂; and flowing the refreshed liquid absorber through the inlet and into the continuous flow spiral on the inside of the membrane section of the module.

The method of removing CO₂ from gas may be a method of removing CO₂ from air, preferably from air within a submarine cabin.

An advantage of this method is that the gas and liquid absorber are never in direct contact. As discussed, typically CO₂ absorption is improved by maximising the surface area between the gas and amine such as through aggressively churned tanks or bubbling foul gas through liquid absorber. However, these methods cause entrained droplets of amine to be transported into the gas stream and necessitates further gas purification. The present invention provides contact between the liquid absorber and CO₂ without the rest of the gas coming into direct contact with the amine. Instead, the CO₂ may diffuse through the gas-permeable and liquid-impermeable membrane. The hydrocyclone technology enhances absorption efficiency by constantly refreshing the amine film present on the surface of the gas-permeable and liquid impermeable membrane. This maintains the concentration gradient which encourages the diffusion of CO₂ through the gas-permeable and liquid-impermeable membrane. This feature is more energy efficient than systems which sometimes provide un-necessary turbulence or bubble formation in the liquid subsystem. Because the liquid absorber and gas stream are kept physically separate, carryover of the amines into the outgoing gas stream is reduced. Since the CO₂-depleted gas requires no further purification, the need for a bulky purification system is obviated. As a result, the entire CO₂ removal method requires less space, making it especially advantageous in submarine environments where space is at a premium.

This invention also offers a lower level of liquid absorber loss, leading to increased lifespan of a particular liquid absorber batch. Less 'top up' or replacement means that cost, crew effort and storage requirements for the CO₂ separation unit are all reduced. It also offers lower power consumption and independent adjustment of gas and liquid absorber flow rates.

Typically, the CO₂ separation unit uses heating to accelerate removal of CO₂ from the liquid absorber. Typically, liquid absorber is cooled in the hydrocyclone or prior to entering the hydrocyclone.

The criteria of passing gas around the outside of the membrane section of the hydrocyclone to absorb CO₂ from the gas outside of the membrane section of the hydrocyclone may be satisfied by merely placing the module in ambient gas. Typically, the method according to the third aspect further comprises simultaneously passing gas around the outside of the cyclonic cone section of the hydrocyclone by directed turbulent or laminar flow of the incoming gas, preferably using a fan.

Preferably, the method further comprises a negative pressure differential applied inside of the hydrocyclone. This means that CO₂ migration rate increases, and a higher concentration gradient can be maintained. A pressure differential also prevents any back diffusion of CO₂. The present invention generally requires lower pressures than typical liquid absorber air purification systems, which reduces the energy required to run the system. The method may further comprise adjusting the flow of liquid absorber, the temperature of the system, the gas flow, and/or the configuration of a valve in response to a reading from one or more sensors or in response to elapsed time.

In a fourth aspect, the present invention relates to a method of retrofitting a module for removing CO₂ from gas as defined according to the first aspect, or a system for removing CO₂ from gas as defined according to the second aspect, into a submarine atmospheric control system. This means that some large costs associated with building new submarines can be avoided, and extensive structural modifications to existing systems are minimised. Further, the systems for preserving life on submarine vessels are important and can be a limiting factor in the duration that the submarine may remain submerged. Therefore, the present invention can advantageously extend the submarine's deployment. Further, the module according to the first aspect of the invention can be retrofitted in isolation into a system which may already have a CO₂ separation unit for removing the CO₂ from a liquid absorber, thereby reducing costs and downtime.

For example, the method may include connecting the module to a CO₂ separation unit. For example, the method may include connecting the module or system to a heater, waste heat source, cooler, pump, vacuum pump, and/or reservoir of liquid absorber.

In a fifth aspect, the present invention relates to a submarine comprising one or more modules for removing CO₂ from gas as defined according to the first aspect, or one or more systems for removing CO₂ from gas as defined according to the second aspect.

Submarine crews operate in confined environments for extended periods, requiring effective gas purification to remove carbon dioxide while ensuring a continuous supply of breathable gas. Traditional gas scrubbers can be bulky and energy-intensive, reducing the available space for storage and essential equipment. By minimising the size and power consumption of a gas purification system according to the present invention, submarines can allocate more energy and space to systems such as propulsion, communications, crew activities and general living conditions.

The invention will now be described with reference to the figures. The figures represent nonlimiting examples of the present invention.

Figure 1 shows an exemplary contactor module as a hydrocyclone constructed with the bulk of the cyclone walls made from an air-permeable membrane (7) that is liquid-impermeable. In this example, the liquid absorber is a liquid amine. Although this is not intended to be limiting, and alternative liquid absorbers are also envisioned.

Refreshed amine solution (3) enters the hydrocyclone at the top at such an angle and velocity to establish and maintain the cyclonic motion. Amine with absorbed CO₂ (4) exits the bottom of the hydrocyclone and interfaces with the scrubber system and with any contactor.

Air to be purified (1) is fed into the chamber surrounding the outside of the hydrocyclone. Air with reduced CO₂ content (2) is allowed to leave the system. CO₂ from the incoming air (5) passes through the membrane (7) and reacts or dissolves into the amine solution (6). If desired, a slight pressure differential (8) can be applied between the incoming air and the inside of the liquid hollow cone in order to improve CO₂ migration across the membrane.

It is also important that the air is refreshed at the outer membrane surface regularly in order to ensure a good supply of CO₂ to the contactor. This can be achieved by either imposed turbulence of a resident volume (e.g., an internal fan) or by directed turbulent or laminar flow of the incoming air to maximise refresh of the air boundary layer near the membrane.

The principal advantage of this invention is the reduction of the need for purified air (2) cleanup in order to remove entrained amines. As the membrane (7) inhibits liquid carryover to the air stream, amines and their breakdown products are constrained to the liquid system (4), away from the breathable air.

With less 'lost' amine, another advantage is the increased lifespan of a particular amine solution batch. Less 'top up' or replacement means that cost, crew effort and storage requirements for the scrubber system are all reduced.

One additional advantage of this approach compared to other membrane-based systems (such as hollow-fibre contactors) is the relatively low liquid pressures required to maintain the highly-refreshed liquid surface (6). Because each amine molecule has approximately the same amount of time in contact with the membrane (and thus exposed to CO₂), less energy is required to provide un-necessary turbulence or bubble formation in the liquid subsystem. The saving of energy is of importance to submarine operations (particularly submarines operating on battery power) and the reduction in liquid pumping requirements will contribute to noise reduction requirements as well.

A third advantage is with regards to system design. Depending on intended use cases, the residence times and number-of-passes for both liquid (3, 6, 4) and air flow pathways (1,2) can be decoupled. For example, air flow could be split 2 ways to parallel hydrocyclone chambers, whereas the liquid could visit these same two hydrocyclones in series, making use of the high CO₂ capacity of the liquid absorber, such as liquid amines. In addition, flow rates of both air and liquid can be adjusted independently depending on system needs.

## Claims

1. A module for removing CO₂ (5) from gas (1), the module comprising:
a hydrocyclone having a cyclonic cone section constructed from a gas-permeable and liquid-impermeable membrane (7);
an inlet to the cyclonic cone section; and
an outlet at the apex of the cyclonic cone section.

2. The module of Claim 1, wherein the inlet and the outlet are configured for fluidic communication with a CO₂ separation unit.

3. The module of Claim 2, further comprising a second hydrocyclone having a cyclonic cone section constructed from a gas-permeable and liquid-impermeable membrane, a second inlet to the second cyclonic cone section, and a second outlet at the apex of the second cyclonic cone section; preferably further comprising one or more further hydrocyclones having a cyclonic cone section constructed from a gas-permeable and liquid-impermeable membrane, having an inlet to the cyclonic cone section, and an outlet at the apex of the cyclonic cone section, wherein each further hydrocyclone is either in parallel or in series with the first and/or second hydrocyclone; even more preferably wherein the inlet and the outlet of the second cyclonic cone section and one or more further cyclonic cone section are configured for fluidic communication with a CO₂ separation unit.

4. The module of any one of the preceding claims, wherein the cyclonic cone section comprises a rigid external supporting mesh or embedded mesh within the membrane (7).

5. The module of any one of the preceding claims, further comprising one or more check valves suitable for ensuring a one-way flow of liquid absorber, preferably wherein the one or more check valves are present at the inlet and/or at the outlet.

6. A system for removing CO₂ (5) from gas (1), the system comprising one or more modules of any one of Claims 1 to 5, a CO₂ separation unit, and a liquid absorber.

7. The system of Claim 6, wherein the CO₂ separation unit comprises a heat source, preferably wherein the heat source is a heat exchanger.

8. The system of Claim 6 or Claim 7, wherein the liquid absorber is a liquid amine.

9. The system of any one of Claims 6 to 8, further comprising a pump for the liquid absorber and/or a means for directed turbulent or laminar flow of gas, such as a fan.

10. A method of removing CO₂ (5) from gas (1), the method comprising:
flowing a liquid absorber in a continuous flow spiral on the inside of the membrane (7) section of a module of any one of Claims 1 to 5 whilst simultaneously passing gas (1) around the outside of the membrane section of the hydrocyclone to absorb CO₂ (5) from the gas (1) outside of the membrane section of the hydrocyclone;
flowing the liquid absorber out of the outlet into a CO₂ separation unit to remove the CO₂; and
flowing the refreshed liquid absorber through the inlet and into the continuous flow spiral on the inside of the membrane (7) section of the module.

11. The method of Claim 10, wherein the CO₂ separation unit uses heating to accelerate removal of CO₂ from the liquid absorber.

12. The method of Claim 10 or Claim 11, further comprising simultaneously passing gas (1) around the outside of the cyclonic cone section of the hydrocyclone, for example, by directed turbulent or laminar flow of the incoming gas (1), preferably using a fan; and/or wherein the method further comprises a negative pressure differential (8) inside of the hydrocyclone.

13. The method of any one of Claims 10 to 12, wherein the liquid absorber is a liquid amine.

14. A method of retrofitting a module for removing CO₂ (5) from gas (1) as defined in any one of Claims 1 to 5, or a system for removing CO₂ (5) from gas (1) as defined in any one of Claims 6 to 9, into a submarine atmospheric control system.

15. A submarine comprising one or more modules for removing CO₂ (5) from gas (1) as defined in any one of Claims 1 to 5, or one or more systems for removing CO₂ (5) from air (1) as defined in any one of Claims 6 to 9.
